# NEW EUROPEAN PATENT SPECIFICATION

(11) **EP 0 536 836 B2**
(45) Date of publication and mention of the opposition decision: **16.06.2004**
(45) Mention of the grant of the patent: 07.01.1998
(21) Application number: 92203011.9
(22) Date of filing: 01.10.1992
(51) Int. Cl.: A01J 7/00, A01J 7/02

(54) **A method of cleaning teat cups and an implement for milking animals applying said method**
Verfahren zum Reinigen von Melkbechern und Gerät zum Melken von Tieren unter Anwendung dieses Verfahrens
Procédé pour nettoyer les manchons trayeur et dispositif de traite d'animaux en applicant ledit procédé

(30) Priority: 04.10.1991 NL 9101676; 13.02.1992 NL 9200258
(43) Date of publication of application: 14.04.1993
(60) Divisional application: 97201765.1
(73) Proprietor: MAASLAND N.V., 3155 PD Maasland (NL)
(72) Inventor: Van den Berg, Karel, NL-2971 BR Bleskensgraaf (NL); Fransen, René, NL-3135 ZD Vlaardingen (NL)
(74) Representative: Corten, Maurice Jean F.M.

(56) References cited:
- EP-A- 0 306 579
- EP-A- 0 320 496
- EP-A- 0 385 539
- AU-B- 560 697
- US-A- 2 065 466
- US-A- 2 558 628
- US-A- 2 624 355
- US-A- 3 012 566

## Description

The present invention relates to an implement for milking animals as defined in the preamble of claim 1.

An implement as described above is known from EP-A-0 306 579.

For hygienic reasons and with a view to the quality requirements to be imposed on the milk, cleaning of the teat cups is important, namely in that sense that dirt is removed from the interior and the exterior of the teat cups and more particularly from the upper sides thereof, since these sides come into contact with the udder of the animals.

It is an object of the present invention to clean up the teat cups. According to the invention, this is achieved by the features of the characterizing part of claim 1.

In a preferred embodiment, separate ducts have been applied in the spray nozzles for the flows of rinsing liquid through the first and second flow-out apertures. This renders it possible to have rinsing of the interior of the teat cups be effected independently of cleaning the exterior and more specifically the upper side of the teat cups. in addition, it becomes possible to apply different pressures on the rinsing liquid flows. So as to effect an adequate cleaning of more particularly the upper side of a teat cup; the second flow-out aperture is preferably annular. In this situation, the second flow-out aperture is more particularly located in a plane perpendicular to the longitudinal axis of a spray nozzle and a teat cup connected thereto. In an advantageous embodiment, the second flow-out aperture is provided at such a height in the spray nozzle that, when a vacuum is applied in a connected teat cup in order to connect the teat cup to the spray nozzle, the teat cup is pulled upwardly and the second flow-out aperture is closed when at least no liquid pressure is present in the duct leading to this flow-out aperture. The first flow-out aperture(s) can then be arranged at such a height in a spray nozzle that, when a teat cup is in the connected state, the first flow-out aperture(s) is/are located directly below the upper edge of the teat cup. In a specific embodiment, the spacing between the first and the second flow-out apertures is approximately 5 to 10 mms.

In a preferred embodiment according to the invention, the cleaning device of the implement is provided with a carrier element, to which the spray nozzles are connected. in accordance with a further feature of the invention, in the carrier element there are present ducts, via which rinsing liquid can be brought to the spray nozzles. According to a further feature of the invention, in the carrier element there is present a first duct system, via which the rinsing liquid can be brought to the first flow-out aperture(s) of the spray nozzles. According to a still further feature of the invention, in the carrier element there is present a second duct system, via which the rinsing liquid can be brought to the second flow-out aperture(s) of the spray nozzles. Consequently, to the cleaning device there need be connected only two supply lines for rinsing liquid. Thus, it is not necessary for each of the flow-out apertures of the spray nozzles to be provided with a separate supply line. As a consequence, it is possible to effect a highly compact construction of the cleaning device. So as to prevent that the rinsing liquid flowing over the upper side of a teat cup via the second flow-out aperture is sprayed excessively in a lateral direction, a screen can be provided around the cleaning device or around the individual spray nozzles in such a manner that it covers the upper end of the connected teat cup(s). Rinsing of the teat cups is of specific importance during automated milking of animals. In accordance with a further feature of the invention, the cleaning device is connected to a milking robot which forms part of the implement for milking animals. The cleaning device may then be secured to the milking robot in such a position that, when the milking robot is not operative for milking, the teat cups mounted on a robot arm forming part of the milking robot can be connected to the deaning device by an upward movement of the robot arm.

In a further embodiment according to the invention, the implement is provided with a deaning member for cleaning the teats of an animal to be milked. As a result, the implement has a multi-functional character, since it can clean both the teat cups and the animal's teats.

For a better understanding of the invention and to show how the same may be carried into effect, reference will now be made, by way of example, to the embodiment shown in the accompanying drawings, in which:
Figure 1 is a side view of an implement for automatic milking of animals, in which the cleaning device of the invention is incorporated;
Figure 2 is a plan view of a portion of the implement shown in Figure 1, in which the cleaning device in accordance with the invention is shown in a plan view;
Figure 3 is a side view of the spray nozzles of the cleaning device in accordance with the invention;
Figure 4 is a cross-sectional view of a spray nozzle connected to a teat cup;
Figure 5 is a side view of an alternative cleaning device with spray nozzles in accordance with the invention;
Figure 6 is a portion of the alternative cleaning device according to the arrow VI-VI in Figure 5;
Figure 7 is a cross-section according to the arrow VII-VII in Figure 5;
Figure 8 is a portion of the alternative cleaning device according to Figure 5, seen in the direction according to the arrow VIII-VIII;
Figure 9 is a plan view of the alternative cleaning device according to Figure 5;
Figure 10 is a side view of an other embodiment of an implement according to the invention, which implement is provided with a cleaning device as well as with a cleaning member for cleaning the teats of the udder of an animal to be milked.
Figure 11 shows the implement of Figure 10, located on the robot arm of the implement of Figure 1, as well as cleaning means for cleaning the cleaning member in Figure 10;
Figure 12 is a plan view of the implement according to Figure 11;
Figure 13 is a side view according to the line XIII-XIII of a portion of the implement shown in Figure 12;
Figure 14 is a cross-section according to the line XIV-XIV in Figure 13;
Figure 15 is a plan view of the implement according to Figure 13;
Figure 16 shows a diagram of an after-treating implement for after-treating the udder and/or the teats after the milking of an animal, it having been indicated schematically how the implement has been built up;
Figure 17 shows an after-treating implement according to Figure 16 incorporated in the implement of Figure 12, and indicated to an enlarged scale according to the line XVII-XVII in Figure 12.

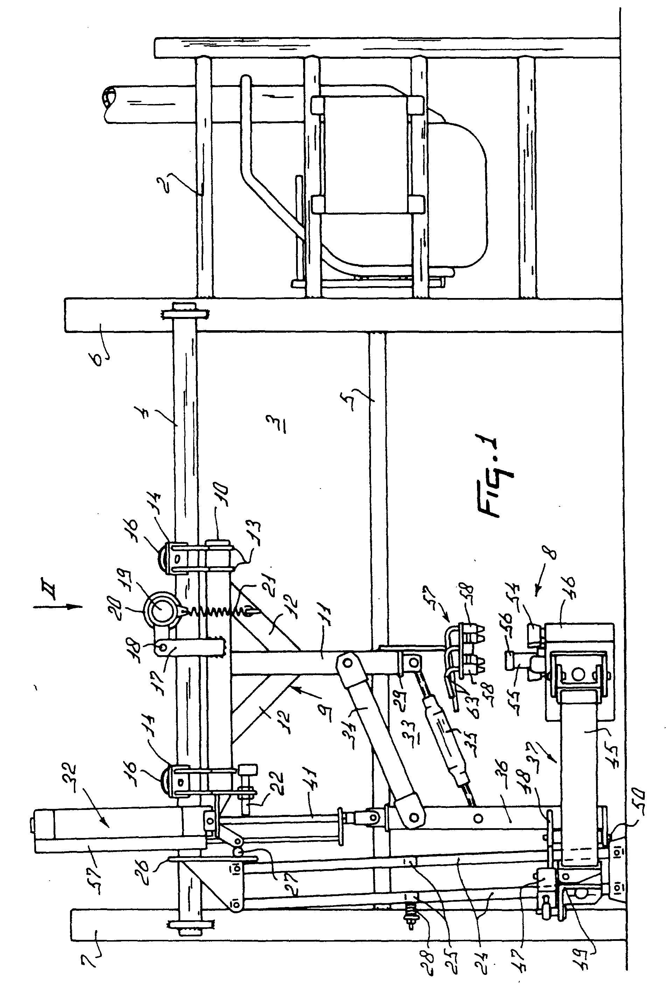

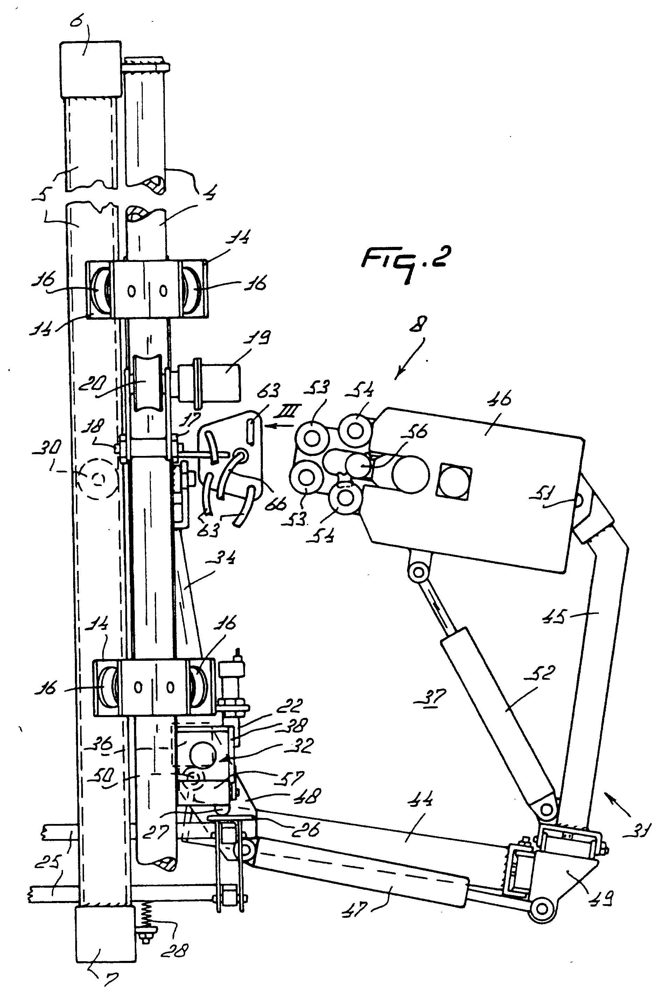

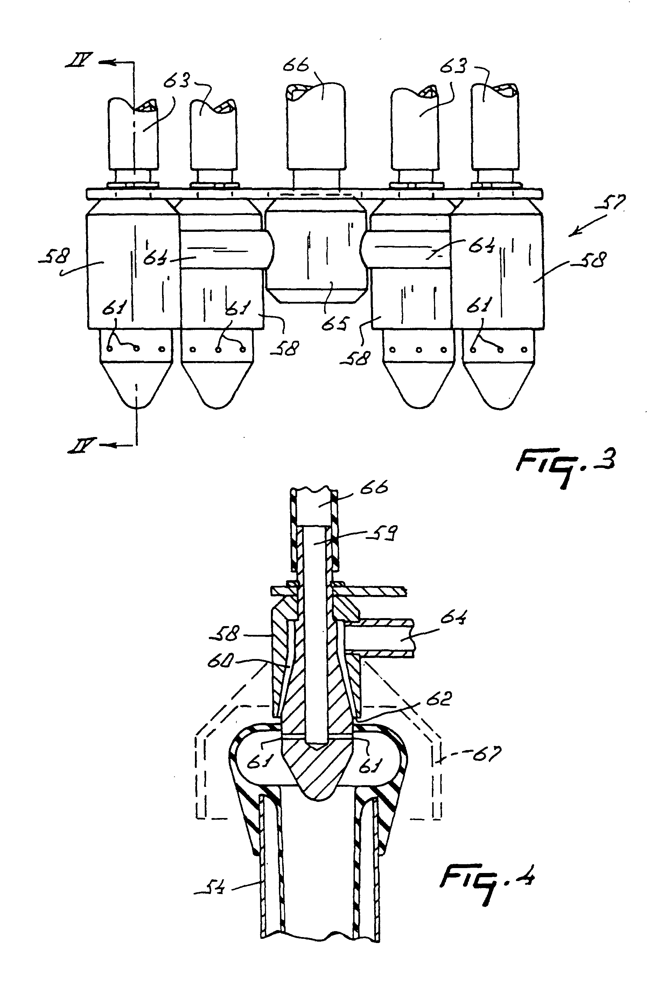

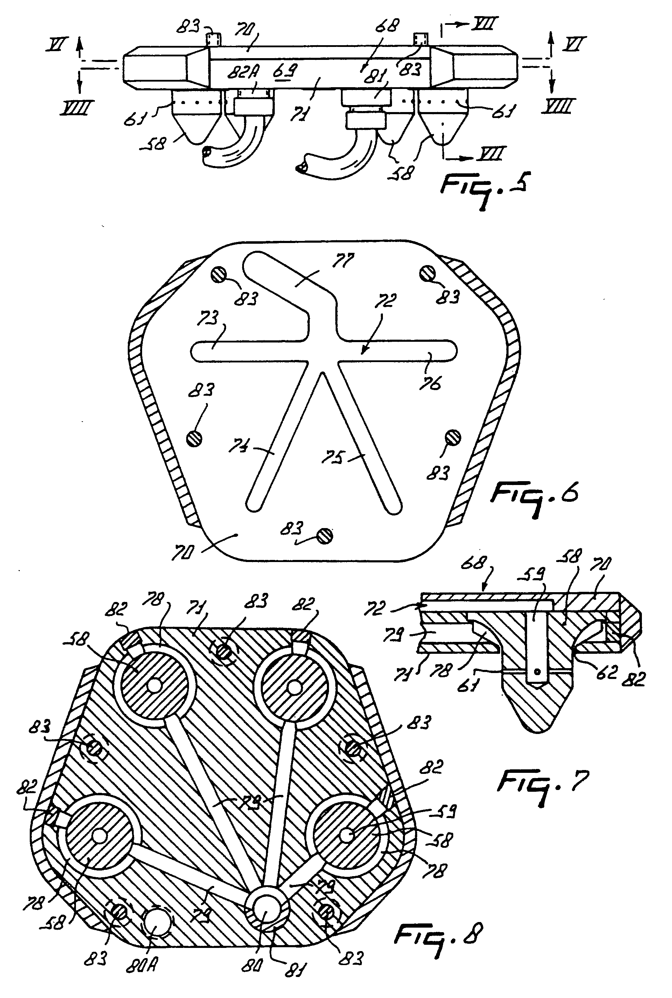

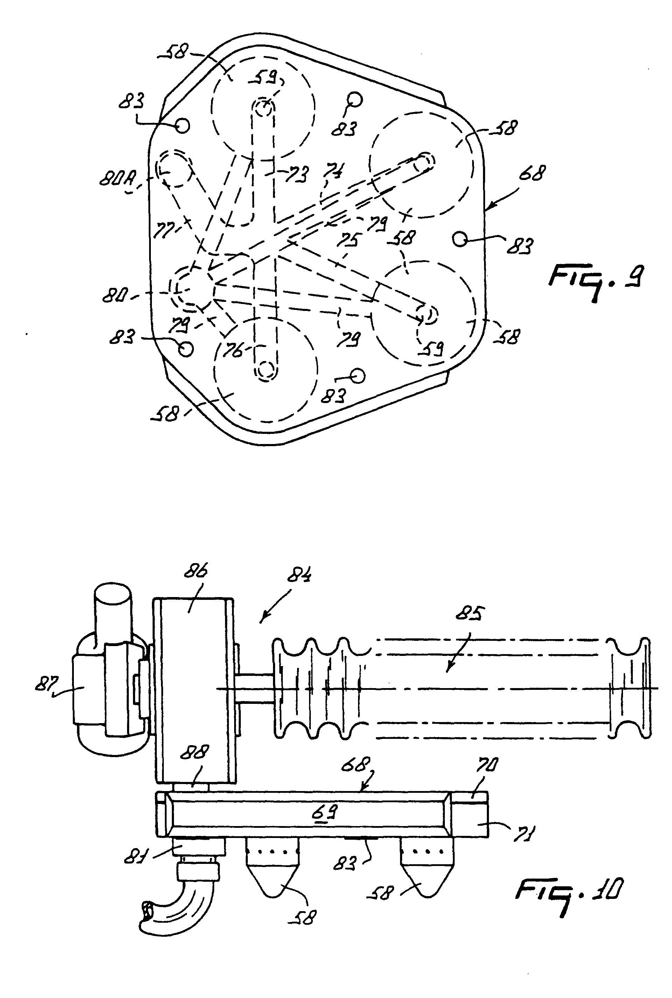

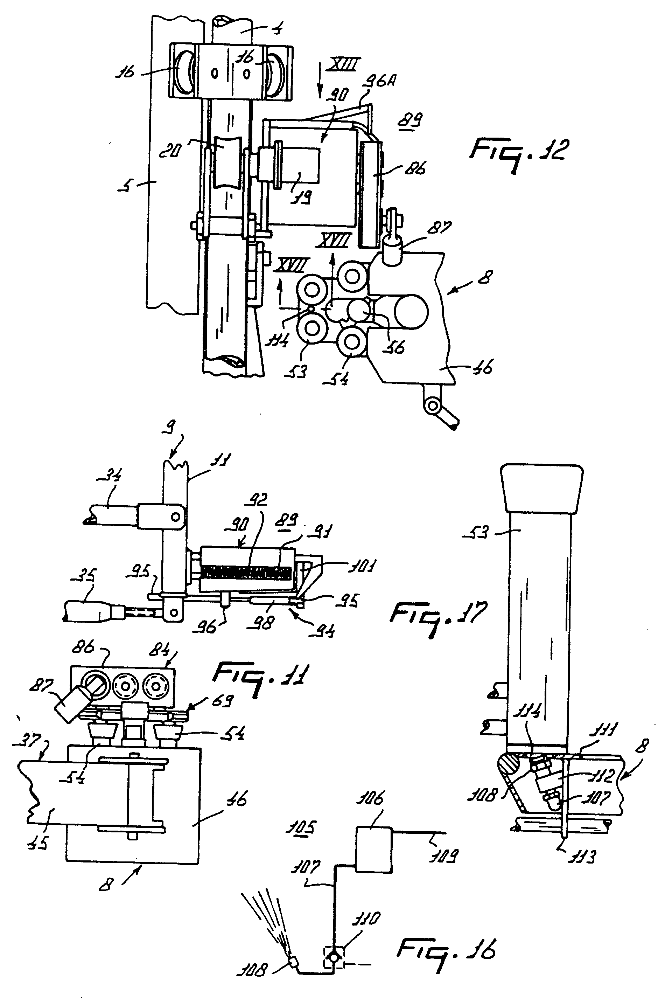

The implement as illustrated in Figures 1 and 2 includes a milking parlour 1 surrounded by a railing 2 which allows the animal a limited freedom of movement. The milking parlour can be entered by the animal from the lateral side at the rear end, whilst the animal can leave same again from this side at the leading end. Since the leading end of the milking parlour is provided with a feeding plant, the cow will advance sufficiently far and arrive in a position in which it can easily be milked. At the longitudinal side of the milking parlour other than the one in which the entrance and exit are located there is provided a fixed frame 3 which forms part of the railing 2, the said frame 3 including a first frame portion 4 and a second frame portion 5. The first frame portion 4 extends parallel to and is located predominantly over the second frame portion 5. In this situation, the first frame portion 4 is rigidly connected to the exterior side of two vertical posts 6 and 7, which form part of the railing 2, whilst the second frame portion 5 is rigidly fitted between these two posts 6 and 7. A milking robot 8 for the automatic milking of animals is movably connected to the first frame portion 4, whilst this milking robot bears against the second frame portion 5, which in further respects is provided at such a height that arms of the milking robot 8 can be moved along its underside to under the cow present in the milking parlour. The milking robot 8 includes a carrier frame 9 for the further portions of the milking robot. By implementing the upper frame portion 4 as a rail, the carrier frame 9 and consequently the entire milking robot 8 can easily be moved along this frame portion. The carrier frame 9 includes a beam 10 which predominantly extends parallel to the first frame portion 4, a pillar 11 which extends perpendicularly thereto and in a vertical downward direction and is rigidly secured thereto and two struts 12. Pairs of supporting elements 13 are located near the ends of the beam 10. Connected to each pair of supporting elements 13 at an angle of approximately 45°, with the aid of supporting plates rigidly connected thereto, are two rollers 16 forming a roller element pair 15, the arrangement being such that the carrier frame 9 is suspended from the upper frame portion 4 in such a manner that it is easily movable therealong. At either side the beam 10 of the carrier frame 9 is provided with two carriers 17. A motor 19 is attached to these carriers in such a manner that it is movable about a pivot shaft 18. This motor 19 drives a roller 20 which preferably has a rubber surface, which roller is pushed by means of a spring member 21 against the upper frame portion 4. Since the spring member 21 is active between the motor 19 and the carrier frame 9, the roller 20 to be driven by the motor 19 is kept in the pushed mode against the upper frame portion 4, so that, when the motor is driven, it is moved length-wise along the upper frame portion 4 and consequently also along the entire carrier frame 9. A sensor 22, which e.g. comprises a laser, is connected to that supporting element 13 which, taken in a direction from the milking parlour, is the rearmost supporting element. With the aid of this sensor 22 it is possible to move the milking robot from a rest position in the longitudinal direction of the milking parlour to a starting position, in which the arms of the milking robot are moved to under the animal present in the milking parlour, and to follow the motions of the animal in the longitudinal direction of the milking parlour. For that purpose, the sensor 22 cooperates with a supporting element 23 which is movable against the rear side of the animal. With the aid of a rod system, which in the present embodiment is constituted by a quadrangular structure, and more in particular a parallelogram structure 24, this supporting element 23 is applied thereon in such a manner that it is pivotal relative to the milking parlour floor. With the aid of two rods 25, the supporting element 23 is provided with a plate 26 which is positioned laterally outside the frame portions 4 and 5 and is arranged such that it can reflect a signal transmitted by the sensor 22. After the sensor 22 has picked-up the reflected signal, it produces a control signal which is a measure of the actual, i.e. the measured, distance between the plate 26 and the sensor 22, by means of which control signal the motor 19 can be driven, the milking robot 8 then being driven in the longitudinal direction of the milking parlour in such a manner that the distance between the plate 26 and the sensor 22 is brought to and maintained at, respectively, a preset value. When the milking robot 8 is in the rest position, then it is in a position which is pushed as far as possible to the rear relative to the frame portions 4 and 5, in which situation the milking robot 8 engages via a contact element 27 the plate 26 and thus maintains the supporting element 23 in a position which is pushed as far as possible to the rear. In other words, the supporting element 23 is locked by the milking robot 8 when the robot is in the rest position. When the milking robot is driven from this rest position into the longitudinal direction of the milking parlour to the starting position, in which the arms of the milking robot are moved to under the animal present in the milking parlour, then the supporting element 23 is unlocked and is pushed under spring action by means of a spring arranged between the parallelogram structure 24 and the railing 2 against the rear side of the cow then present in the milking parlour. When the cow moves forwardly or rearwardly, the supporting element 23 will then continue to be pushed against the rear side of the animal by the pressure of the spring 28, so that the position of the plate 26 is decisive for the position of the animal in the milking parlour in the longitudinal direction and so that, by means of the sensor 22, whilst keeping the distance in the longitudinal direction between the plate 26 and the sensor 22 constant, the milking robot can follow the cow's movements in the longitudinal direction of the milking parlour. In the present embodiment, the pillar 11 of the carrier frame 9 extends vertically downwardly to slightly below the second frame portion 5. At the bottom side of this pillar 11 there is a horizontal, rearwardly extending strip 29, on which a freely rotatable roller element 30 is provided. The lower frame portion 5 is constituted by a rail and more specifically by a rail in the form of a U-shaped beam, the freely rotatable roller element 30 having been arranged such that it is movable between the two upright edges of the U-shaped beam. Thus, the milking robot 8 bears against the lower frame portion 5 and can in this situation, when the milking robot 8 is moved by means of the motor along the first frame portion 4, move easily along the second frame portion 5. In addition to the carrier frame 9, the milking robot includes a robot arm construction 31 which is predominantly movable in the vertical direction relative to the carrier frame 9 with the aid of an operating cylinder 32. The robot arm construction 31 is movably connected to the carrier frame 9 by means of a quadrangular structure 33. In the embodiment shown, the upper arm 34 of this quadrangular structure 33 is of a fixed length, whilst the lower arm 35 thereof has an adjustable length. This allows the orientation of the robot arm construction 31 to be adjusted to a limited extent. The robot arm construction 31 comprises a predominantly vertical robot arm 36, as well as robot arms 37 which are movable in a predominantly horizontal plane. The robot arm 36 is connected to the pillar 11 of the carrier frame 9 via the quadrangular construction 33. The operating cylinder 32 is operative between the carrier frame 9 and the robot arm 36. Since the orientation of the robot arm 36 is slightly adjustable with the aid of the lower arm 35 of the quadrangular construction 33, the position of the point of contact of the operating cylinder 32 on the robot arm 36 is spatially not fully defined. For this reason, the housing of the operating cylinder 32 is provided, capably of at least a limited degree of pivoting, on a carrier plate 38 connected to the beam 10 of the carrier frame 9. Mounted on this carrier plate 38 are supports 39, between which the housing of the operating cylinder 32 can move about a pivot shaft 40. In the present embodiment, the operating cylinder is designed as a servo-pneumatic positioning cylinder. This means that at the lower end of the piston rod 41 a position feedback rod 43 is fitted by means of a plate 42 connected rigidly thereto, with the aid of which a signal is derived in the portion 57 of the operating cylinder by a potentiometer which indicates the position of the piston rod relative to the cylinder housing, whilst, with the aid of this signal supplied by this potentiometer, the position of the piston rod 41 relative to the cylinder housing can be adjusted to a preset position. The operating cylinder 32 is further provided with an over-load protection, whereby, as soon as the animal present in the milking parlour exercises pressure on the robot arm construction 31 by e.g. kicking it with its leg, the robot arm construction 31 can be moved to its lowest position. In Figures 2 and 4, the milking robot 8 is shown in the resting position, wherein it has been moved as far as possible to the rear relative to the frame portions 4 and 5 and wherein the robot arm construction 31 has been brought to the lowest possible position near the soil. When the cow is present in the milking parlour and the milking procedure is to be started, the milking robot 8 is brought from the rest position to the start position, i.e. it is adjusted to the position in which the arms of the milking robot 8 can be moved to under the cow.

In the present embodiment, the milking parlour is provided for that purpose with arms 44, 45 and 46. The arms 44 and 45 are arranged at a fixed angle of 90° relative to each other. The arms 44 and 45 are therefore moved in conjunction, more specifically by an operating cylinder 47 which is provided between a supporting plate 48 secured to the robot arm 36 and a connecting member 49 arranged between the two arms 44 and 45. The two arms 44 and 45 are rotatable about a predominantly vertical pivot shaft 50 between the supporting plate 48 and a supporting plate 50, the latter plate also being rigidly connected to the robot arm 36, more particularly at its bottom side. With respect to the arm 45, the arm 46 is rotatable about a predominantly vertical pivot shaft 51 and is rotated relative to this shaft 51 with the aid of an operating cylinder 52, which is arranged between the arm 46 and that end of the arm 45 which is located near the connecting member 49. Teat cups 53 and 54, which are connectable to the teats of the cow, are provided near the end of the arm 46. Arranged between the two teat cups 54 is a slide which is movable along the arm 46 and on which there is provided a sensor 55 which by a sector-sequential scanning motion can accurately determine the position of the teats, whereby the operating cylinders 32, 47 and 52 can be computer-controlled in such a manner that the teat cups can be connected in the proper manner to the teats. When the robot arms 44 to 46 have been moved to under the cow, these arms are in a relatively low position, in which the sensor 55 will not yet detect teats. Using the operating cylinder 32, the robot arms 44 to 46 are now lifted step-by-step until the sensor 55 detects one or more teats of the animal. Should during this upward motion the robot arms 44 to 46 have been moved up to such a height that the upper edge of the sensor 55 pushes against the cow's abdomen, then, by means of a switch 56 provided at the upper side of the sensor 55, it is effected that the robot arms can again be moved downwardly, whereafter the positional determination of the teats with the aid of the sensor 55 can be repeated by a gradual lifting of the robot arms.

The implement, as it is described in the foregoing, further includes a cleaning device 57 for the teat cups 53 and 54. This cleaning device 57 is rigidly connected to the downwardly directed pillar 11. The cleaning device 57 incorporates four downwardly directed spray nozzles 58. Each of the spray nozzles 58 has two separate rinsing liquid ducts 59 and 60. The duct 59 extends centrally through the spray nozzle from top to bottom, whilst near the lower end in this duct laterally directed first flow-out apertures 61 have been applied, which, when a teat cup is connected to a relevant spray nozzle, end relatively closely under the upper edge of the teat cup. The second duct 60 is provided approximately concentrically with respect to the first duct 59 in the spray nozzle and at the bottom side has an annular second flow-out aperture 62 which is located in a plane perpendicular to the longitudinal axis of the spray nozzle and the teat cup connected thereto. The first duct 59 of each of the spray nozzles 58 is connected to a rinsing liquid supply line 63. The second duct 60 of each of the spray nozzles is connected to a pipe section 64, whilst the pipe sections 64 of the individual spray nozzles end in a distributor element 65 connected to a rinsing liquid supply line 66. The rinsing liquid supply lines 63 can be connected via a pump to a rinsing liquid reservoir (this pump and this rinsing liquid reservoir have not been shown in the drawings).

When the milking robot is not operative for milking, which situation is illustrated in Figure 1, then the teat cups 53 and 54 are straight under the spray nozzles 58, so that, simply and solely by an upward motion of the robot arm carrying the teat cups, these teat cups can be connected to the relevant spray nozzles 58. Figure 2 illustrates the situation in which the robot arms have not yet been moved so far that the teat cups have arrived straight under the spray nozzles of the cleaning device. When, between milking of different animals or after milking of the animals, the teat cups and the milking lines connected thereto must be cleaned, then the robot arm cum teat cups is moved to under the spray nozzles and moved upwardly until the spray nozzles engage the aperture at the upper side of the teat cups. In this position, the first flow-out apertures 61 will be in a position almost directly below the upper edge of a teat cup and the flow-out aperture 62 will be almost directly above the upper edge of a teat cup. By thereafter supplying a rinsing liquid via the lines 63 and 66, this rinsing liquid is passed on the one hand over the upper side of the teat cups, whilst on the other hand rinsing liquid is introduced into the teat cups. During rinsing, using a three-way valve which during milking connects the milking lines connected to the teat cups to a centrally located milk tank, the connection between the teat cups and the milk tank is interrupted and a connection is established to e.g. the rinsing liquid reservoir. Acting thus, the liquid can be circulated by means of the pump via the supply lines 63 and the ducts 59 in the spray nozzles, whilst thereafter the rinsing liquid is conveyed to the reservoir through the teat cups and the milking lines connected thereto. By virtue of the fact that the rinsing liquid, passed over the upper side of the teat cups via the line 66 and the duct 60, falls on the soil and can be discharged from there through a gutter, it is of importance that the rinsing liquid supply line 66 is not connected to the rinsing liquid reservoir, via which the liquid is circulated through the teat cups and the relevant milking lines. The line 66 can therefore be alternatively connected directly to a water tap or indirectly via an element in which simultaneously e.g. a special cleaning agent or a disinfectant can be added. After rinsing, the rinsing liquid must be sucked from the relevant milk lines.

When the teat cups are connected to the spray nozzles, a vacuum is produced in the teat cups. This results in that the teat cups are lifted slightly upwardly over the lower end of the relevant spray nozzles, the second flow-out aperture 62 in each of the spray nozzles then being closed. The spacing between the first flow-out apertures 61 and the second flow-out aperture 62 is therefore relatively small. This spacing is e.g. in the range of from 5 to 10 mms, whilst in a concrete embodiment a spacing of 7 mms has been chosen. When the rinsing liquid is supplied at an increased pressure via the pipe section 64 through the duct 60, the liquid emerging from the second flow-out aperture 62 will be forced between the lower edge of the second flow-out aperture 62 and the slightly resilient upper edge of the relevant teat cup and be sprayed in the lateral direction. In that case it is advantageous to provide around the cleaning device or around the individual spray nozzles a screen 67 which drapes over the upper end of the teat cup(s) in the connected state.

The invention is not limited to the embodiment described here, but also relates to all the possible variations of the cleaning device which are within the scope of protection of the accompanying claim 2. The invention is furthermore not only limited to the cleaning device for the teat cups themselves, but also relates to the implement in which the cleaning device is incorporated in such an efficient manner that the teat cups of the milking robot in the rest position can be easily connected to the cleaning device.

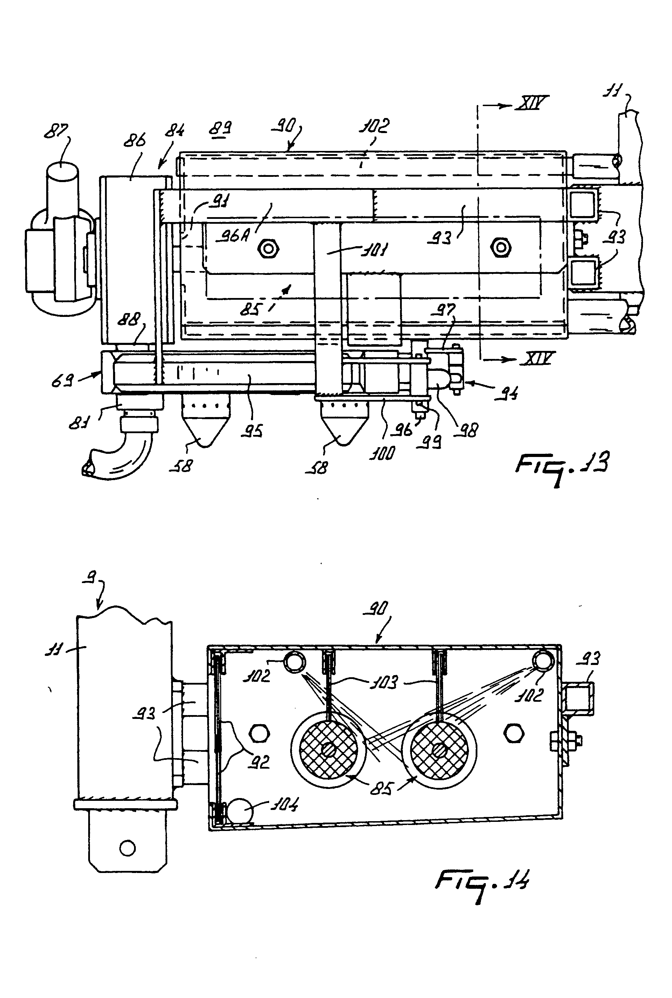

In Figure 5 is shown a second embodiment of a cleaning device 68. This alternative cleaning device 68 includes a carrier plane 69 having thereon four downwardly directed spray nozzles 58. As is indicated in Figure 7, each of the spray nozzles 58 includes two separate rinsing liquid ducts 59 and 60. As has been described in the preceding embodiment, the rinsing liquid ducts 59 and 60 end in, respectively, a first flow-out aperture 61 and a second flow-out aperture 62. In the carrier plane 69, the spray nozzles 58 are clamped between a first portion 70 and a second portion 71. As has been indicated in Figure 6, in the surface of the first portion 70 there is arranged a first duct system 72. Preferably, the first portion 70 is an aluminum plate, in which the pattern of the first duct system has been arranged. The four ends 73 to 76 of the first duct system 72 end in the four rinsing liquid ducts 59 of the spray nozzles 58. The carrier plane 69 furthermore consists of a second portion 71, wherein a second duct system 77 is arranged (Figure 8). In the second portion 71 of the carrier plane 69 there are arranged four apertures 78, through which the spray nozzles 58 are pushed.

In the second portion 71 there are furthermore arranged from the side four bores 79. The bores 79 are arranged in such a manner that each of them extends through the centre of an aperture 78 (Figure 8), while together they end in a first vertical bore 80 arranged in the second portion 71. Prior to arranging the bores 79 in the second portion 71 of the carrier plane 69, in the first vertical bore 80 there is arranged a first connecting nipple 81. On arranging bores 79, the first connecting nipple 81 is pierced. After arranging bores 79, they are sealed at the edge of the second portion 71 by means of sealing caps 82.

In the second portion 71 there is furthermore arranged a second vertical bore 80A, wherein is located a second connecting nipple 82A. The first portion 70 and the second portion 71 of the carrier plane 69 are clamped together by means of bolts 83, whereby the first portion 70 constitutes a sealing plate for the first and second vertical bores 80, 80A. The second bore 80A ends in the first duct system 72 arranged in the first portion 70. The second portion 71 of the carrier plane 69 constitutes with its surface in the clamped condition a sealing plate for the first duct system 72 arranged in the surface of the first portion 70. Figure 9 is indicated in a plan view of the carrier plane 69 how the patterns of the first duct system 72 and the second duct system 77 are arranged in the two portions 70 and 71.

In order to obtain a proper sealing of the clamped together portions 70 and 71, it is preferred to make the second portion 71 of a relatively soft plastic material and the first portion 70 of aluminum.

In a further embodiment according to Figure 10, the above-described cleaning device 57 includes a cleaning member 84 for cleaning the teats of a milking animal. The cleaning member 84 includes two adjacent cleaning elements in the form of profiled rollers 85, which by their axes are supported rotatably in a gear box 86. The profiled rollers 85 are driven by an electric motor 87 attached against a side of the gear box 86. The cleaning member 84 is bolted with the gear box 86 on the carrier plane 69 by means of two bolts 83. Between the gear box 86 and the carrier plane 69 there are placed spacer rings 88.

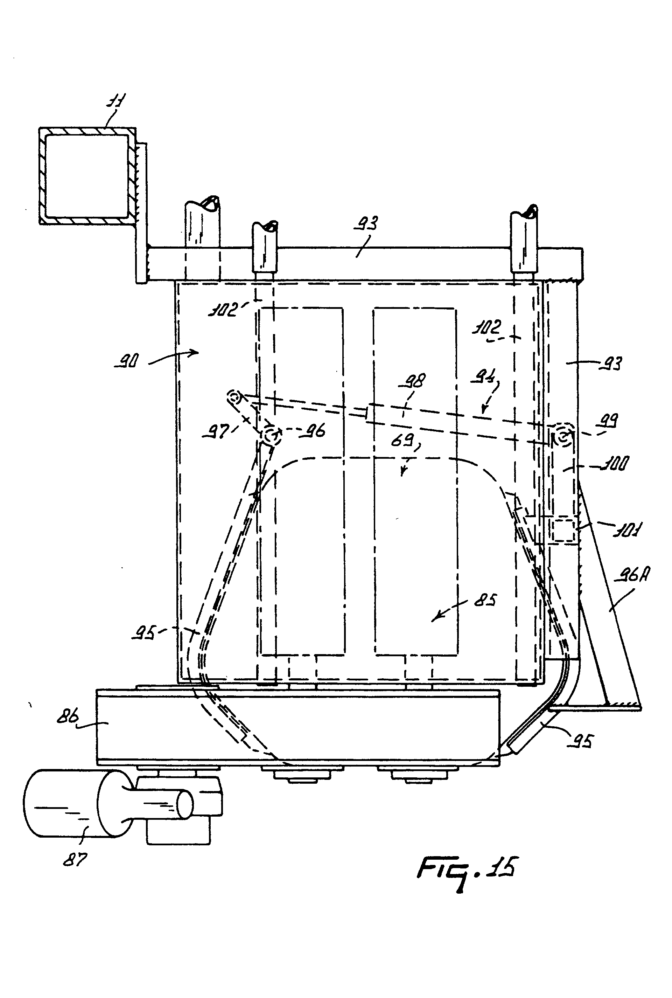

In case it should be desirable to clean the teats of the animal to be milked, the carrier plane 69 is sucked via the teat cups 54 on the arm 45 of the milking robot 8 (Figure 11). Hereafter, by means of the sensor 55, the position of the teats of the milking animal is determined, in order that the rollers 85 can be brought to one or more of the teats. After positioning of the rollers 85, the teats are caught between the oppositely rotating profiled rollers, so that the friction between the rollers 85 and the teats ensures that dirt is removed from the teats.

After cleaning of the teats and possibly rinsing of the teat cups 54, the carrier plane 69 is disconnected from the robot arm 45. Then, the carrier plane 69 is stored away in an otherwise non-shown carrier.

The implement as described in the foregoing may furthermore be provided with cleaning means 89 for cleaning the cleaning member 84. The cleaning means 89 comprise a box-like housing 90 attached to the beam 11 of the carrier frame 9 by means of an L-shaped box-profile strip 93 (Figure 11). In the box-like housing 90 there is arranged a slot 91 in two contiguous sides. The slot 91 is covered by means of a row of brush hairs 92. The width of the slot 91 is selected such that it extends the diameter of the profiled rollers 85. Thus, it is possible to place the profiled rollers 85 in the box-like housing 90 by means of the robot arm 37. In order to place the rollers 85 in the box-like housing 90, they must be brought by means of the arm 45 at the level of and in front of the slot 91. By moving the arm 45 in a horizontal plane towards the slot 91, the rollers 85 are subsequently brought into the box-like housing 90. The gear box 86 and the carrier plane 69 then remain outside the box-like housing 90. In Figures 12 to 15 is shown how the rollers 85 are located in the box-like housing 90. After the rollers 85 have been placed in the box-like housing 90, the under-pressure in the teat cups 54 is removed and, consequently, the robot arm 45 is disconnected from the spray nozzles 58 of the carrier plane 69.

At its bottom side, the carrier plane 69 is provided with a locking and positioning device 94, by means of which the carrier plane 69 can be placed in a fixed position relative to the box-like housing 90. The locking and positioning device 94 includes two U-shaped strips 95 which are similar in form as the edges of the carrier plane 69. The U-shaped strips 95 are arranged on either side of the box-like housing 90. The first U-shaped strip 95 is located at the bottom side of the box-like housing 90, opposite the slot 91, and is fixedly connected by means of a support 96A to the L-shaped strip 93 which is arranged at the box-like housing 90. The second U-shaped strip 95 is arranged near the slot 91 at the bottom side of the box-like housing 90. The second U-shaped strip 95 is pivotable about a vertical shaft 96. To the vertical shaft 96 is connected a lever 97, which is attached to the end of a piston rod of a cylinder 98. By means of its other end, the cylinder 98 is connected to a vertical shaft 99. The vertical shaft 99 is clamped between two horizontal, interspaced strips 100. The strips 100 are fixedly connected to a box-profile 101 which is attached to the L-shaped box-profile strip 93.

In Figures 13 to 15 is indicated how the carrier plane 69 is held in the box-like housing 90 by means of a locking and positioning device 94. By means of its edge, the carrier plane 69 is locked between the two U-shaped strips 95, after energizing of the cylinder 98, so that the carrier plane 69 is situated always in a same position relative to the box-like housing 90. The carrier plane 69 can be unlocked by energizing the cylinder 98 again, as a result of which the second U-shaped strip 95 pivots in the direction of the beam 11 (Figure 15). After the second U-shaped strip 95 has pivoted away, the carrier plane 69 is freely movable in a horizontal plane into the direction of the slot 91, as a result of which by means of the robot arm 45 the profiled rollers 85 can be taken from the box-like housing 90 for subsequently cleaning the teats. Preferably, the cylinder 98 is a pneumatic one.

After the animal's teats have been cleaned by means of the profiled rollers 85, these rollers are stored away in the box-like housing 90 by means of the robot arm 45. Figure 14 shows in cross-section how the profiled rollers 85 are located in the box-like housing 90. For cleaning the profiled rollers 85 there are arranged at the upper sides of the box-like housing 90 two spray elements 102. The spray elements 102 include a perforated tube, the one end of which is closed and the other is connected to a line. Through the line there is supplied to the spray elements 102 a cleaning liquid, during the cleaning of the profiled rollers 85. The perforations in the spray elements 102 are arranged such that the cleaning liquid squirts against the profiled rollers 85. At the upper side of the box-like housing 90 there is arranged above each of the profiled rollers 85 a row of brush hairs 103, which extend to as far as the profiled rollers 85. During cleaning of the profied rollers 85 there is squirted through the spray elements 102 a cleaning liquid against the rollers 85, which rotate against the brush hairs 103. In the lower side of the box-like housing 90 there is arranged an aperture 104, to which a discharge line is connected. During cleaning, the cleaning liquid originating from the spray elements 102 is discharged via the discharge line. Preferably, the bottom of the box-like housing 90 is inclined at an angle, so that the cleaning liquid flows in the direction of the discharge aperture 104.

In a further embodiment according to the invention, the robot arm 45 includes an after-treating device 105 for disinfecting the udder and/or the teats after the animal has been milked. The after-treating device 105 includes a pressure vessel 106 having stored therein the cleaning/disinfecting liquid, as well as a line 107 supplying the liquid to a spray nozzle 108 (Figure 16). To the pressure vessel 106 there is connected a further line 109, via which an overpressure is brought in the pressure vessel 106. The overpressure prevailing in the pressure vessel 106 is preferably three atmospheres. In the supply line 107 to the spray nozzle 108 there is incorporated a valve 110, by means of which the liquid flow to the spray nozzle 108 can be closed and opened, respectively. The valve 110 may be designed as an electromagnetic one. In a preferred embodiment according to the invention, the valve is arranged near the spray nozzle 108, so that the line piece between the valve 110 and the spray nozzle 108 is relatively short. Therefore, after the valve 110 has been opened, the pressurized liquid in line 107 need only cover a relatively short way to the spray nozzle 108. The advantage of this relatively short way to be covered by the liquid is that, after the valve has been opened, the liquid is sprayed by the spray nozzle 108 in a fan-shape almost immediately. As a result, on opening and closing of the valve 110, the occurrence of initial and final phenomena in the production of the fan-shaped spray pattern by the spray nozzle 108 is prevented.

As has been shown in Figure 12, the spray nozzle 108 is located at the end of the robot arm 45 between the two front teat cups 53. In Figure 17 is indicated how the spray nozzle 108 is arranged in the end of the robot arm 45. The spray nozzle 108 is located below the carrier plane 111, on which the teat cups 53 rest. The spray nozzle 108 is positioned in a holder 112 connected to a plate 113, which is perpendicular to the carrier plane 111. The spray nozzle 108 is positioned such in the holder 112 that the fan-shaped spray pattern is directed forwardly and upwardly relative to the end of the robot arm 45. In this connection, the fan-shaped spray pattern encloses with the plate 113 an angle of approximately 20°. In the carrier plane 111 there is arranged an aperture 114, through which the spray liquid of the spray nozzle is sprayed.

The operation of the after-treating device 105 is as follows.

After the milking procedure has been terminated, the teat cups 53 are removed from the teats and are withdrawn to the robot arm 45, where they are supported against the carrier plane 111. Subsequently, the robot arm 45 is positioned such that the fan-shaped spray pattern from the spray nozzle 108 exactly touches the rear side of the udder of the milked animal. The positioning of the robot arm 45 can be effected by means of the sensor 56 and/or by means of animal-depending co-ordinates previously supplied to a control computer of the robot arm 45. After the robot arm 45 has been positioned, the valve 110 is opened, while simultaneously the robot arm is moved in a horizontal plane in the direction of the front side of the animal. Thus, the entire udder is sprayed by the fan-shaped spray pattern. Since the fan-shaped spray pattern is directed forwardly and upwardly relative to the end of the robot arm 45, and since the spraying of the udder is effected from the rear in the direction of the front of the udder, it is prevented that spray liquid originating from the udder and/or the fan-shaped spray pattern falls into the teat cups 53. The way to be covered by the robot arm 45 in the horizontal plane, as well as the height of the spray nozzle 108 to the animal's udder can then be supplied previously per animal to a control computer of the robot arm 45. It is also possible for the height and the distance to be determined by the sensor 56.

It will furthermore be obvious that the above-described embodiments of the cleaning device and the after-treating device can be applied in the implement for (automatically) milking animals not only in combination, but also separately.

## Claims

1. An implement for milking animals, comprising a cleaning device (57; 68) for automatically cleaning teat cups (53, 54), including a rinsing liquid circuit with spray nozzles (58), around each of which the end of a teat cup (53, 54) incorporated in the rinsing liquid circuit can be fitted, each spray nozzle (58) having a first flow-out aperture (61), via which rinsing liquid applied to the spray nozzle (58) can be passed into the teat cup (53; 54) connected to the spray nozzle (58), **characterized in that** each nozzle furthermore comprises a second flow-out aperture (62) spaced from the first flow-out aperture along the spray nozzle, through which rinsing liquid can be passed over the upper edge of a teat cup (53; 54) connected thereto.

2. An implement as claimed in claim 1, **characterized in that** separate ducts (59, 60) have been applied in the spray nozzles (58) for the flow of rinsing liquid through the first (61) and second (62) flow-out apertures.

3. An implement as claimed in claim 1 or 2, **characterized in that** the second flow-out aperture (62) is annular.

4. An implement as claimed in claim 1, 2 or 3, **characterized in that** the second flow-out aperture (62) is located in a plane perpendicular to the longitudinal axis of a spray nozzle (58) and a teat cup connected thereto.

5. An implement as claimed in any one of the preceding claims 1 to 4, **characterized in that** the second flow-out aperture (62) is provided at such a height in a spray nozzle (58) that, when a vacuum is applied in a connected teat cup with the object of connecting the teat cup to the spray nozzle (58), the teat cup is pulled upwardly and the second flow-out aperture (62) is closed when at least no liquid pressure is present in the duct (60) leading to this flow-out aperture (62).

6. An implement as claimed in any one of claims 1 to 5, **characterized in that** the spacing between the first (61) and second flow-out aperture (62) is approximately 5 to 10 mms.

7. An implement as claimed in any one of claims 1 to 6, **characterized in that** a screen (67) is provided around the cleaning device (57; 68) or around the individual spray nozzles (58) in such a manner that it covers the upper end of the connected teat cups (53, 54).

8. An implement as claimed in any one of claims 1 to 7, **characterized in that** the cleaning device (57; 68) is connected to a milking robot (8) which forms part of the implement for milking animals.

9. An implement as claimed in any one of claims 1 to 8, **characterized in that** the cleaning device (57; 68) is secured to the milking robot (8) in such a position that, when the milking robot (8) is not operative for milking, the teat cups (53, 54) mounted on a robot arm (45) forming part of the milking robot (8) can be connected to the cleaning device (57; 68) by an upward movement of the robot arm (45).

10. An implement as claimed in any one of claims 1 to 9, **characterized in that** the cleaning device (68) is provided with a cleaning member (84) for the teats of an udder of an animal to be milked.

## Patentansprüche

1. Vorrichtung zum Melken von Tieren mit einer Reinigungsvorrichtung (57; 68) zum automatischen Reinigen von Zitzenbechern (53, 54), wobei die Reinigungsvorrichtung einen Spülflüssigkeits-Kreislauf mit Sprühdüsen (58) aufweist, die jeweils von dem Ende eines an den Spülflüssigkeits-Kreislauf angeschlossenen Zitzenbechers (53, 54) zu umschließen sind, wobei jede Sprühdüse (58) eine erste Auslaßöffnung (61) aufweist, durch die der Sprühdüse (58) zugeführte Spülflüssigkeit in den an die Sprühdüse (58) angeschlossenen Zitzenbecher (53; 54) einzuleiten ist,
**dadurch gekennzeichnet, daß** jede Düse ferner eine zweite Auslaßöffnung (62) aufweist, die längs der Sprühdüse mit Abstand von der ersten Auslaßöffnung liegt, und durch die Spülflüssigkeit über die Oberseite eines an die Sprühdüse angeschlossenen Zitzenbechers (53; 54) zu leiten ist.

2. Vorrichtung nach Anspruch 1,
**dadurch gekennzeichnet, daß** in den Sprühdüsen (58) separate Bohrungen (59, 60) für den Durchfluß von Spülflüssigkeit durch die ersten (61) und zweiten (62) Auslaßöffnungen angebracht sind.

3. Vorrichtung nach Anspruch 1 oder 2,
**dadurch gekennzeichnet, daß** die zweite Auslaßöffnung (62) ringförmig ist.

4. Vorrichtung nach Anspruch 1, 2 oder 3,
**dadurch gekennzeichnet, daß** die zweite Auslaßöffnung (62) in einer Ebene angeordnet ist, die sich senkrecht zu der Längsachse einer Sprühdüse (58) und eines daran angeschlossenen Zitzenbechers erstreckt.

5. Vorrichtung nach einem der vorhergehenden Ansprüche 1 bis 4,
**dadurch gekennzeichnet, daß** die zweite Auslaßöffnung (62) in einer solchen Höhe in einer Sprühdüse (58) angeordnet ist, daß der Zitzenbecher bei Erzeugen eines Vakuums in einem angeschlossenen Zitzenbecher zum Zwecke des Anschlusses des Zitzenbechers an die Sprühdüse (58) nach oben gezogen und die zweite Auslaßöffnung (62) geschlossen wird, wenn zumindest kein Flüssigkeitsdruck in der Bohrung (60) ansteht, die zu dieser Auslaßöffnung (62) führt.

6. Vorrichtung nach einem der Ansprüche 1 bis 5,
**dadurch gekennzeichnet, daß** der Abstand zwischen der ersten (61) und der zweiten Auslaßöffnung (62) etwa 5 bis 10 mm beträgt.

7. Vorrichtung nach einem der Ansprüche 1 bis 6,
**dadurch gekennzeichnet, daß** um die Reinigungsvorrichtung (57; 68) oder um die einzelnen Sprühdüsen (58) herum ein Schirm (67) derart angeordnet ist, daß er das obere Ende der angeschlossenen Zitzenbecher (53, 54) abschirmt.

8. Vorrichtung nach einem der Ansprüche 1 bis 7,
**dadurch gekennzeichnet, daß** die Reinigungsvorrichtung (57; 68) an einen Melkroboter (8) angeschlossen ist, der Bestandteil der Vorrichtung zum Melken von Tieren ist.

9. Vorrichtung nach einem der Ansprüche 1 bis 8,
**dadurch gekennzeichnet, daß** die Reinigungsvorrichtung (57; 68) an dem Melkroboter (8) in einer solchen Position befestigt ist, daß in der Ruhelage des Melkroboters (8) die Zitzenbecher (53, 54), die an einem Teil des Melkroboters (8) bildenden Roboterarm (45) angeordnet sind, durch eine Aufwärtsbewegung des Roboterarmes (45) an die Reinigungsvorrichtung (57; 68) anzuschließen sind.

10. Vorrichtung nach einem der Ansprüche 1 bis 9,
**dadurch gekennzeichnet, daß** die Reinigungsvorrichtung (68) mit einer Reinigungseinheit (84) für die Zitzen des Euters eines zu melkenden Tieres versehen ist.

## Revendications

1. Installation pour la traite d'animaux, comprenant un dispositif de nettoyage (57, 68) servant à nettoyer automatiquement des gobelets trayeurs (53, 54), comportant un circuit de liquide de rinçage ayant des buses de pulvérisation (58), autour de chacune desquelles l'extrémité d'un gobelet trayeur (53, 54) incorporé dans le circuit de liquide de rinçage peut être installé, chaque buse de pulvérisation (58) ayant une première ouverture d'écoulement (61) par laquelle un liquide de rinçage appliqué à la buse de pulvérisation (58) peut être passé dans le gobelet trayeur (53, 54) relié à la buse de pulvérisation (58), **caractérisée en ce que** chaque buse comprend en outre une deuxième ouverture d'écoulement (62), espacée de la première ouverture d'écoulement le long de la buse de pulvérisation, par laquelle un liquide de rinçage peut être passé sur le bord supérieur d'un gobelet trayeur (53, 54) lui étant relié.

2. Installation selon la revendication 1, **caractérisée en ce que** des conduits (59, 60) séparés, ont été appliqués dans les buses de pulvérisation (58) pour l'écoulement d'un liquide de rinçage à travers les premières (61) et deuxième (62) ouvertures d'écoulement.

3. Installation selon la revendication 1 ou 2, **caractérisée en ce que** la deuxième ouverture d'écoulement (62) est de forme annulaire.

4. Installation selon la revendication 1, 2 ou 3, **caractérisée en ce que** la deuxième ouverture d'écoulement (62) est disposée dans un plan perpendiculaire à l'axe longitudinal d'une buse de pulvérisation (58) et d'un gobelet trayeur lui étant relié.

5. Installation selon l'une quelconque des revendications 1 à 4 précédentes, **caractérisée en ce que** la deuxième ouverture d'écoulement (62) est prévue, dans une buse de pulvérisation (58), à une hauteur telle que, lorsqu'une aspiration est appliquée dans un gobelet trayeur relié en vue de relier le gobelet trayeur à la buse de pulvérisation (58), le gobelet trayeur est tiré vers le haut et la deuxième ouverture d'écoulement (62) est fermée, lorsqu'au moins aucune pression de liquide n'existe dans le conduit (60) menant à cette ouverture d'écoulement (62).

6. Installation selon l'une quelconque des revendications 1 à 5, **caractérisée en ce que** l'espacement entre les première (61) et deuxième (62) ouvertures d'écoulement est d'à peu près 5 à 10 mm.

7. Installation selon l'une quelconque des revendications 1 à 6, **caractérisée en ce qu'**un écran (67) est prévu autour du dispositif de nettoyage (57, 68) ou autour des buses de pulvérisation (58) individuelles, de telle manière qu'il recouvre l'extrémité supérieure des gobelets trayeurs (53, 54) reliés.

8. Installation selon l'une quelconque des revendications 1 à 7, **caractérisée en ce que** le dispositif de nettoyage (57, 68) est relié à un robot de traite (8) qui fait partie de l'installation pour la traite d'animaux.

9. Installation selon l'une quelconque des revendications 1 à 8, **caractérisée en ce que** le dispositif de nettoyage (57, 68) est fixé au robot trayeur (8) dans une position telle que, lorsque le robot de traite (8) ne fonctionne pas pour la traite, les gobelets trayeurs (53, 54) montés sur un bras de robot (45) faisant partie du robot de traite (8) peuvent être reliés au dispositif de nettoyage (57, 68) par un déplacement vers le haut du bras de robot (45).

10. Installation selon l'une quelconque des revendications 1 à 9, **caractérisée en ce que** le dispositif de nettoyage (68) est pourvu d'un organe de nettoyage (84) pour les tétines du pis d'un animal à traire.
